# EUROPEAN PATENT APPLICATION

(11) **EP 3 560 761 A1**
(43) Date of publication of application: **30.10.2019**
(21) Application number: 18382286.5
(22) Date of filing: 26.04.2018
(51) Int. Cl.: B60R 5/04

(54) **VEHICLE PACKAGE TRAY HINGE APPARATUS**

(71) Applicant: A. Raymond et Cie, 38000 Grenoble (FR)
(72) Inventor: Marin, Daniel, 08271 Artés (ES); Villarroya Torán, Ricard, 08600 Berga (ES)
(74) Representative: Tilmann, Max Wilhelm

(57) **Abstract**

The disclosed inventive concept provides a vehicle package tray apparatus and a hinge apparatus. The hinge apparatus includes a package tray hinge, a spring, a spring cover rotatably attached to the package tray hinge, and a flipper panel hinge. Ends of the spring cover and the spring are insertable into the flipper panel hinge and translate between a first position and a second position as the spring cover rotates with respect to the package tray hinge. The hinge apparatus is used in combination with a package tray having a flipper panel portion pivotally attached to a package tray portion. The hinge apparatus allows the flipper panel portion to rotate in a clockwise manner when a vehicle seatback reclines and applies a force to the flipper panel portion. The spring causes the flipper panel hinge to return to its original, extended position as the seatback returns to its unreclined position.

## Description

### TECHNICAL FIELD

The disclosed inventive concept pertains to package trays for the rear cargo area of a vehicle. More particularly, the disclosed inventive concept concerns package trays that close a variable gap between a rear seat of the vehicle and the package tray. Even more particularly, the disclosed inventive concept pertains to hinge mechanisms for use with the package tray.

### BACKGROUND OF THE INVENTION

Certain types of larger cars, such as station wagons, minivans, and SUVs, have a baggage compartment or cargo area that is open to the rest of the vehicle, as opposed to more compact vehicles in which the cargo area or trunk is closed off from the rest of the vehicle. As a result, the cargo area in these larger vehicles is typically visible to those outside of the vehicle through the windshield. Therefore, a package tray or parcel shelf may be positioned in the cargo area in order to prevent the contents stored in the cargo area from being viewed by those outside of the vehicle.

Package trays are planar members which extend between the rear row of seats and the cargo area door. However, the rear seats in these larger cars are able to recline into the cargo area, thereby reducing the distance between the rear seatback and the cargo area door. This is contrary to rear seats in smaller vehicles which are generally fixed and do not recline into the trunk.

Package trays having a fixed length will prevent the rear seat from reclining if they are too long. Alternatively, if the package trays are too short, it will provide a gap between the rear seat and an end of the package tray. This is both visually and functionally undesirable. Objects, such as umbrellas, golf clubs, and the like, may be placed on top of the package tray and, if a gap between the rear seat and the package tray is not covered, these objects may fall into the lower portion of the cargo area. Thus, there is a need for a package tray which is adjustable in length based on the degree of reclining of the rear seat.

Prior solutions have been proposed which include a spring-loaded hinge and a folding member hingedly attached to an end of the package tray. For example, U.S. Patent Nos. 7,658,434, 7,896,418, 8,544,929, 9,302,627, 9,725,043 and Japanese Patent No. 2008168680 each disclose a package tray having an adjustable member for closing a gap provided between an end of the package tray and the rear seat of a vehicle.

However, as in so many areas of vehicle technology, there is always room for improvement related to package trays and parcel shelves which are adjustable in relation to a vehicle's rear seat.

### SUMMARY OF THE INVENTION

The disclosed inventive concept overcomes the problems associated with known vehicle package trays by providing a simplified construction. The disclosed inventive concept offers the significant general advantage of allowing portions of the package tray to be pivotally attached to one another and a package tray hinge to be axially offset.

Particularly, the disclosed inventive concept provides a vehicle package tray for covering a cargo area of a vehicle in order to conceal the contents stored within the cargo area from view outside of the vehicle. The package tray is positionable between the cargo area door of the vehicle and the rear row of seats or a seat back. As the rear seats recline, a portion of the package tray is adjusted in order to maintain its cover over the cargo area and prevent an open space or gap from being formed between the package tray and the rear seats.

The package tray includes a package tray portion and a flipper panel portion that are pivotally attached to one another. As the rear seats recline, the distance between the rear seats and an end of the package tray portion decreases and the rear seat applies pressure to the flipper panel portion. As a result, the flipper panel portion rotates with respect to the package tray portion in order to accommodate the decreasing distance and to prevent a gap from being formed therebetween.

The package tray includes a vehicle package tray hinge apparatus which is mounted to the package tray portion and the flipper panel portion. The hinge apparatus is spring-loaded and causes the flipper panel portion to return to its original unstressed position once the rear seats are moved forward or are returned to their unreclined position. The hinge apparatus comprises, generally, a package tray hinge attached to the package tray portion, a coiled tension spring housed within the package tray hinge, a spring cover, and a flipper panel hinge attached to the flipper panel portion.

Distal ends of the spring and the spring cover are movably disposed within the flipper panel hinge and each translates between a first end and a second end of the flipper panel hinge. Thus, as the flipper panel portion moves between its stressed and unstressed positions, the distal ends of the spring and the spring cover slidably move within the flipper panel adapter in order to accommodate this movement. The spring provides a constant tension force on the flipper panel hinge in order to push the flipper panel portion against the rear seats. As a result, the flipper panel portion returns to its unstressed position when the rear seats move forward or are returned to their original unreclined position and the force of the spring is greater than the force of the rear seats on the flipper panel hinge.

The above advantages, in addition to other advantages and features, will be readily apparent from the following detailed description of the invention when taken in connection with the accompanying drawings.

### BRIEF DESCRIPTION OF THE DRAWINGS

For a more complete understanding of this disclosed inventive concept, reference should now be made to the embodiment illustrated in greater detail in the accompanying drawings and described below by way of examples of the disclosed inventive concept wherein:
FIG. 1 is an environmental view of a vehicle package tray utilizing a vehicle package tray hinge apparatus in accordance with the disclosed inventive concept;
FIG. 2 is a perspective view of the vehicle package tray utilizing the hinge apparatus in accordance with the disclosed inventive concept;
FIG. 3 is a side view of the hinge apparatus in accordance with the disclosed inventive concept in use;
FIG. 4 is a side view of the hinge apparatus in accordance with the disclosed inventive concept in use with a spring cover removed;
FIG. 5 is a first side perspective view of a package tray hinge in accordance with the disclosed inventive concept;
FIG. 6 is a second side perspective view of the package tray hinge in accordance with the disclosed inventive concept;
FIG. 7 is a first side perspective view of the spring cover in accordance with the disclosed inventive concept;
FIG. 8 is a second side perspective view of the spring cover and a locking pin in accordance with the disclosed inventive concept;
FIG. 9 is a front perspective view of a flipper panel hinge in accordance with the disclosed inventive concept;
FIG. 10 is a bottom perspective view of the flipper panel hinge in accordance with the disclosed inventive concept;
FIG. 11 is a perspective view of a spring in accordance with the disclosed inventive concept;
FIG. 12 is a first front perspective view of the hinge apparatus in accordance with the disclosed inventive concept mounted to a vehicle package tray;
FIG. 13 is a second front perspective view of the hinge apparatus in accordance with the disclosed inventive concept;
FIG. 14 is a bottom perspective view of the vehicle package tray in a first position and utilizing a plurality of the hinge apparatus in accordance with the disclosed inventive concept; and
FIG. 15 is a bottom perspective view of the package tray in a second position utilizing a plurality of the hinge apparatus in accordance with the disclosed inventive concept.

### DETAILED DESCRIPTION OF THE INVENTION

In the following figures, the same reference numerals will be used to refer to the same components. In the following description, various operating parameters and components are described. These specific parameters and components are included as examples and are not meant to be limiting.

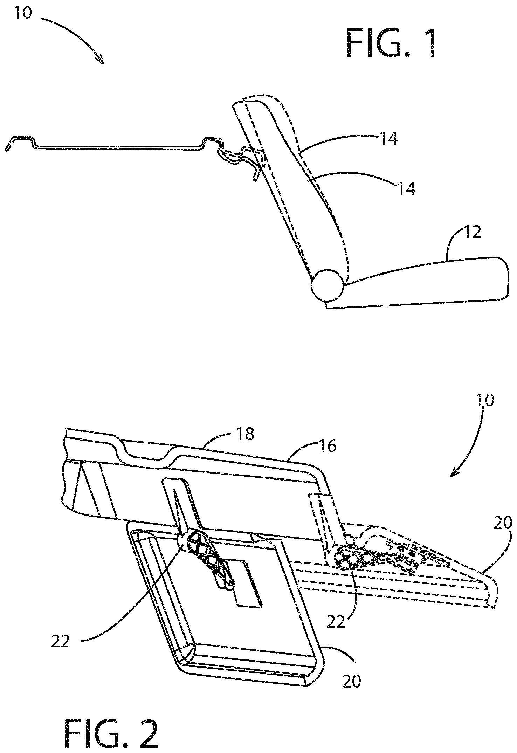

In accordance with the disclosed inventive concept and with reference to the drawings, there is provided a vehicle package tray apparatus denoted at 10. As shown in FIG. 1, the package tray apparatus 10 is shown in position behind a rear seat 12 of a vehicle. The rear seat 12 includes a seatback 14, which may be reclined with respect to the rest of the rear seat 12. As will be discussed in more detail below, FIG. 1 shows the package tray apparatus 10 in both a first, extended or "unstressed" position, shown as dashed lines as the seatback 14 is in its unreclined position, and a second, retracted or "stressed" position, shown as solid lines as the seatback 14 is reclined toward the package tray apparatus 10. The terms "stressed" and "unstressed" refer to the state of a spring in the hinge apparatus, as described in more detail below.

As shown in FIG. 2, the package tray apparatus 10 is shown without reference to the rear seat 12. The package tray apparatus 10 comprises a package tray 16, which includes a package tray portion 18 and a flipper panel portion 20, and a hinge apparatus 22 mounted to both the package tray portion 18 and the flipper panel portion 20. As noted above, the package tray apparatus 10 is shown as dashed lines when in the unstressed position and shown as solid lines when in the stressed position. It is to be understood that the hinge apparatus 22 may be used as a retrofit to an existing package tray and is not limited to being used in combination with the specific package tray 16 illustrated and discussed herein.

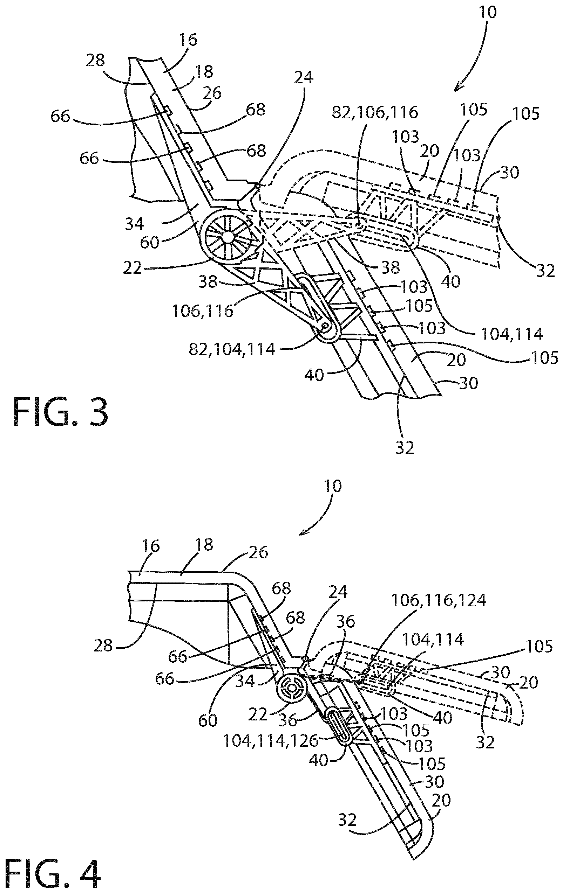

As shown in FIGS. 3 and 4, the package tray portion 18 and the flipper panel portion 20 are pivotally attached to one another by any suitable hinge mechanism, such as a mechanical fastener 24. This allows the package tray portion 18 and the flipper panel portion 20 to rotate about a central axis of the fastener 24 with respect to one another. The package tray portion 18 has a top surface 26 and bottom surface 28. Similarly, the flipper panel portion 20 has a top surface 30 and a bottom surface 32. Alternatively, the package tray portion 18 and the flipper panel portion 20 need not be pivotally attached to one another by the fastener 24. Instead, the hinge apparatus 22 may facilitate the entire rotation of the two portions 18 and 20.

The hinge apparatus 22 is attached to the bottom surfaces 28 and 32 of the package tray portion 18 and the flipper panel portion 20, respectively. As discussed in more detail below, the hinge apparatus 22 causes the flipper panel portion 20 to rotate to its unstressed position, as shown by the dashed lines, when the seatback 14 is not reclined. The hinge apparatus 22 comprises a package tray hinge 34, a spring 36, a spring cover 38, and a flipper panel hinge 40. As shown, the package tray hinge 34 is attached to the bottom surface 28 of the package tray portion 18 and the flipper panel hinge 40 is attached to the bottom surface 32 of the flipper panel portion 20. The spring 36 is shown in FIG. 4 with the spring cover 38 removed from the hinge apparatus 22.

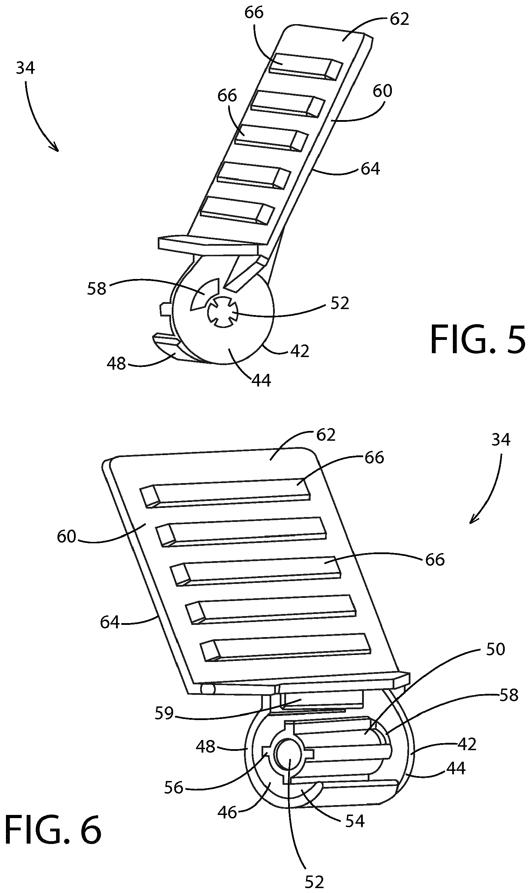

With reference to FIGS. 5 and 6, the package tray hinge 34 is shown in more detail apart from the rest of the hinge apparatus 22. The package tray hinge 34 includes a spring housing 42 having an end wall 44, an open second end 46, and an incomplete cylindrical sidewall 48. The package tray hinge 34 also includes a tubular member 50 extending axially from the end wall 44. The tubular member 50 has a central bore 52 extending through the end wall 44 and open at both ends thereof. The package tray hinge 34 includes a cavity 54 defined between the tubular member 50 and the sidewall 48. Preferably, the tubular member 50 has a plurality of radially-extending spokes 56 extending into the cavity 54. The end wall 44 includes a slot 58 formed therein for receiving a locking pin described below. The package tray hinge 34 also includes a flange 59 extending from the sidewall 48 of the spring housing 42 into the cavity 54. As will be appreciated below, the flange 59 restricts rotation of the spring 36 when housed therein.

The package tray hinge 34 also includes a package tray attachment plate 60 for attaching the package tray hinge 34 to the package tray portion 18. The package tray attachment plate 60 is, preferably, integrally formed with the spring housing 42. The package tray attachment plate 60 has a top surface 62 and a bottom surface 64. The top surface 62 is secured to the package tray portion 18 by any suitable means, such as welding, mechanical fastening, or an adhesive. Preferably, the package tray attachment plate 60 includes a plurality of steps 66 arranged parallel to one another formed in the top surface 62 thereof which nests within respective grooves 68 (FIGS. 3 and 4) formed in the bottom surface 28 of the package tray portion 18. This provides improved means for securing the package tray attachment plate 60 to the package tray portion 18.

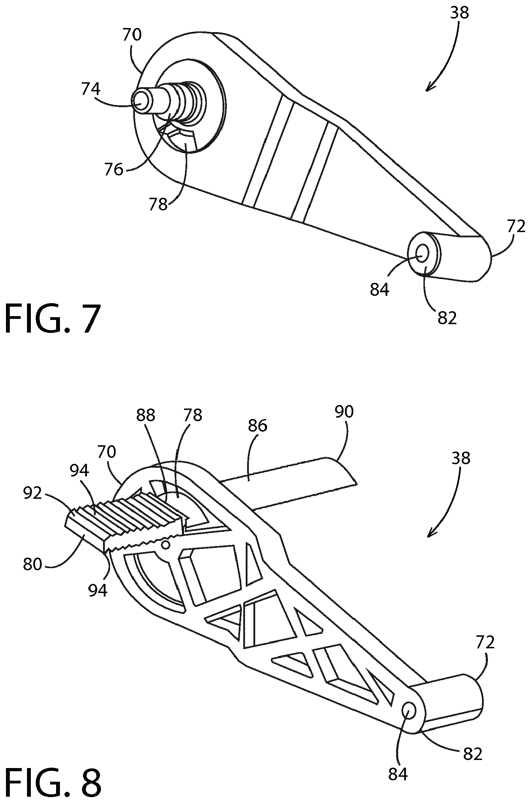

Referring to FIGS. 7 and 8, the spring cover 38 is shown. The spring cover 38 has a first end 70 and a second end 72. As shown in FIG. 7, the spring cover 38 includes a stem 74 located proximate the first end 70 and extending axially. The stem 74 is removably insertable into the bore 52 formed in the tubular member 50 in order to rotatably secure the spring cover 38 to the package tray hinge 34. Preferably, the stem 74 includes a lip 76 which engages the tubular member 50 and further secures the stem 74 therein. The stem 74 defines an axis of rotation about which the spring cover 38 rotates with respect to the package tray hinge 34. It is to be appreciated that this axis of rotation is offset from the axis of rotation about which the flipper panel portion 20 rotates with respect to the package tray portion 18 defined by the fastener 24.

The spring cover 38 also includes a slot 78, similar to the slot 58 in the package tray hinge 34, formed therein for receiving a locking pin 80. As discussed below, the locking pin 80 is insertable into the slot 78, as well as the slot 58, for locking the spring cover 38 in position with respect to the package tray hinge 34. A cylindrical finger 82 is formed at the second end 72 of the spring cover 38 and extends parallel to and in the same direction as the stem 74. The finger 82 has a central bore 84 extending therethrough which is opened at both ends to provide a passageway through the finger 82.

With respect to the locking pin 80 shown in FIG. 8, the locking pin 80 includes an extension 86 having a first end 88 and a second end 90. The extension 86 is sized to fit securely within the slot 78 formed in the spring cover 38, as well as the slot 58 formed in the package tray hinge 34. Thus, the locking pin 80 is slidably insertable into the slot 78 in the spring cover 38 and may extend through the slot 58 in the package tray hinge 34 when aligned in order to prevent rotation of the spring cover 38 with respect to the package tray hinge 34. The locking pin 80 also includes a grip member 92 attached to the second end 90 of the extension 86 at the first end 88 thereof. The grip member 92 is dimensionally larger than the slot 78 in the spring cover 38, which prevents the entire locking pin 80 from extending through the spring cover 38. Preferably, the grip member 92 includes ridges 94 formed on both the top and bottom surfaces thereof to provide improved grippability. The ridges 94 are parallel to one another and extend perpendicular to the long axis of the locking pin 80 and the direction in which the locking pin 80 is inserted into the spring cover 38. Thus, the grip member 92 allows for the locking pin 80 to be easily inserted and removed from the spring cover 38. The locking pin 80 is intended to be used when the hinge apparatus 22 is being shipped or otherwise transported to the customer. The locking pin 80 maintains the hinge apparatus 22 in its stressed position while being attached to the package tray 16 itself. Thereafter, the locking pin 80 may be removed and operable between the stressed and unstressed positions.

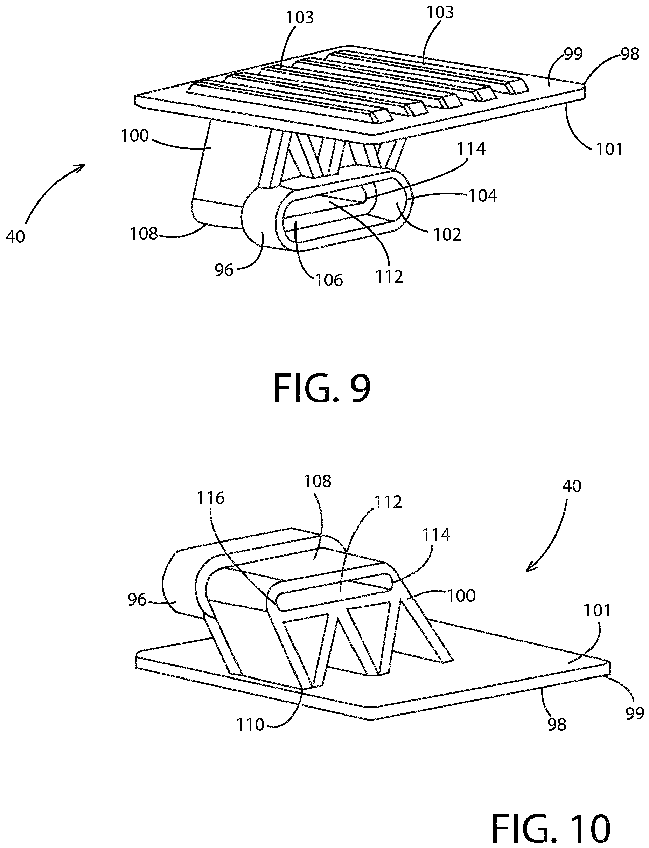

As shown in FIGS. 9 and 10, the flipper panel hinge 40 is shown. The flipper panel hinge 40 includes a finger receptor 96, a flipper panel attachment plate 98, and a support member 100 interconnecting the finger receptor 96 and the flipper panel attachment plate 98. The finger receptor 96 has a first elongated channel 102 for receiving the finger 82 of the spring cover 38. As will be discussed in more detail below, the finger 82 translates between a first end 104 of the first channel 102 and a second end 106 of the first channel 102 as the flipper panel portion 20 rotates between the stressed position and the unstressed position, respectively. The inner diameter of the first channel 102 is the same or slightly larger than the outer diameter of the finger 82 in order to ensure smooth translation of the finger 82 within the first channel 102. Preferably, the first channel 102 is cylindrical in order to accommodate the finger 82 having a circular cross-section.

The support member 100 is attached to the finger receptor 96 at a first end 108 thereof and attached to the flipper panel attachment plate 98 at a second end 110 thereof. The support member 100 includes a second elongated channel 112 for receiving an end of the spring 36. Similar to the finger 82 moving within the first channel 102, an end of spring 36 translates between a first end 114 of the second channel 112 and a second end 116 of the second channel 112 as the flipper panel portion 20 rotates between the stressed position and the unstressed position, respectively. The inner diameter of the second channel 112 is the same or slightly larger than the outer diameter of the spring 36 in order to ensure smooth translation of the spring 36 within the second channel 112. Furthermore, the second channel 112 is open to the first channel 102 so that the end of the spring 36 may extend into the first channel 102 and into the bore 84 of the finger 82.

The flipper panel attachment plate 98 is, preferably, integrally formed with the support member 100 and the finger receptor 96. The flipper panel attachment plate 98 has a top surface 99 and a bottom surface 101. The top surface 99 is secured to the flipper panel portion 20 by any suitable means, such as welding, mechanical fastening, or an adhesive. Preferably, the flipper panel attachment plate 98 includes a plurality of steps 103 arranged parallel to one another formed in the top surface 99 thereof which nests within respective grooves 105 (FIGS. 3 and 4) formed in the bottom surface 32 of the flipper panel portion 20. This provides improved means for securing the flipper panel attachment plate 98 to the flipper panel portion 20.

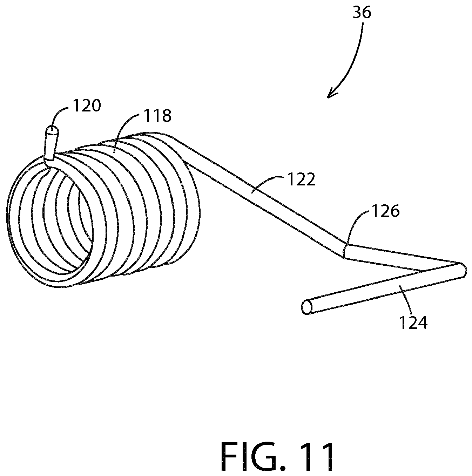

FIG. 11 illustrates the spring 36 apart from the other components of the hinge apparatus 22. The spring 36 comprises a coil 118, a first tip 120 radially extending from one side of the coil 118, an arm 122 extending tangential to the coil 118 and perpendicular to an axis of rotation of the spring 36, and a second tip 124 extending perpendicular to the arm 122 and parallel to the axis of rotation of the spring 36. Optionally, the arm 122 may have a bend 126 formed therein in order to accommodate for the distance between the coil 118 and the flipper panel hinge 40. The bend 126 may also provide additional structural integrity.

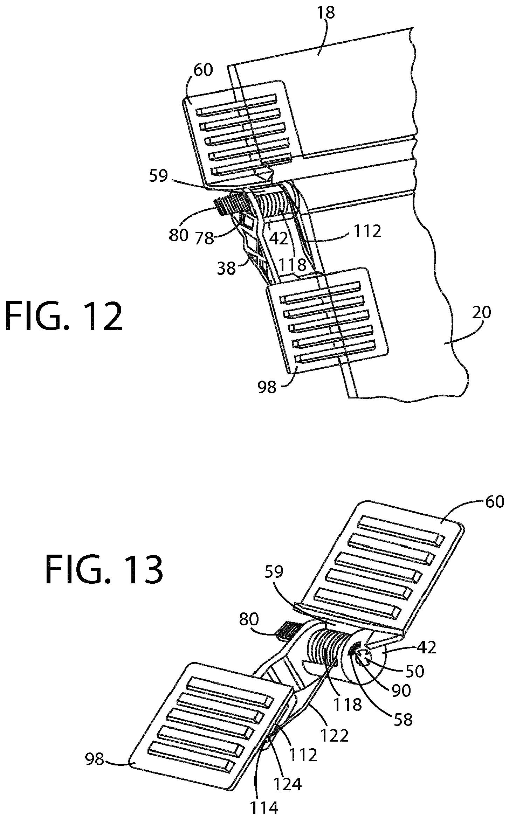

With reference to FIGS. 12 and 13, the fully assembled hinge apparatus 22 is illustrated. FIG. 12 shows the hinge apparatus 22 partially positioned on the package tray portion 18 and the flipper panel portion 20. Alternatively, FIG. 13 shows the hinge apparatus 22 apart from the package tray portion 18 and the flipper panel portion 20. It is to be appreciated that the spring 36 is housed within the cavity 54 of the spring housing 42 as the tubular member 50 axially extends through the coil 118. The coil 118 of the spring 36 is sandwiched between the flipper panel hinge 40 and the spring 36. Although not shown, it is to be understood that the first tip 120 of the spring 36 is positioned behind the flange 59 in order to prevent free rotation of the spring 36 and effectuate an increase in spring tension as the second tip 124 of the spring 36, which is positioned within the second channel 112 of the support member 100, is rotated away from the first tip 120 of the spring 36. Both FIGS. 12 and 13 illustrate the hinge apparatus 22 in its fully stressed and locked position. This is indicated by the fact that the arm 122 of the spring 38 has been rotated toward a lower portion of the opening formed in the sidewall 48 of the spring housing 42 and the locking pin 80 extends through both of the slots 58 and 78.

Referring back to FIGS. 3 and 4, the vehicle package tray apparatus 10 is shown in use moving between the unstressed position shown as dashed lines and the stressed position shown as solid lines. When in the unstressed position, the flipper panel portion 20 extends at approximately a 15 degree angle with respect to a horizontal plane and abuts against the seatback 14 of a vehicle's rear seat 12, shown in FIG. 1. The flipper panel portion 20 extends to cover a gap provided between the rear seat 12 and the package tray portion 18. In this position, the finger 82 on the spring cover 38 extends into the second end 106 of the first channel 102 and the second tip 124 of the spring 36 extends into the second end 116 of the second channel 112.

As the seatback 14 moves to a reclined position, the distance provided between the rear seat 12 and the package tray portion 18 is reduced. Thus, as the seatback 14 applies rearward forward against the flipper panel portion 20, the flipper panel portion 20 pivots about the fastener 24 to accommodate this change in distance. As noted above, the axis of rotation of the spring 36 is offset from the axis of rotation of the flipper panel portion 20 defined by the fastener 24. As a result, the distance between the first and second channels 102 and 112 and the tubular member 50, about which the spring cover 38 rotates, does not remain fixed. Therefore, the finger 82 and the second tip 124 of the spring 36 must translate within the flipper panel hinge 40 in order to compensate for this change in distance between the stressed position and the unstressed position. Thus, the finger 82 on the spring cover 38 and the second tip 124 of the spring 36 translate from the second ends 106 and 116 to the first ends 104 and 114 of the first channel 102 and the second channel 112, respectively, as the seatback 14 applies pressure to the flipper panel portion 20. In a fulled stressed position, the flipper panel portion 20 is at approximately a 70 degree angle with respect to a horizontal plane.

As the seatback 14 applies pressure to the flipper panel portion 20, causing the flipper panel portion 20 to rotate in a clockwise direction, the second tip 124 of the spring 36 rotates away from the first tip 120. This causes the tension in the spring 36 to increase and become stressed. Thus, the spring 36 applies a constant force onto the flipper panel portion 20 when in this position. As a result, when the seatback 14 is moved forward to a less-reclined position, or not reclined at all, the spring 36 causes the flipper panel portion 20 to rotate in a counterclockwise direction simultaneously, thereby staying in contact with the seatback 14.

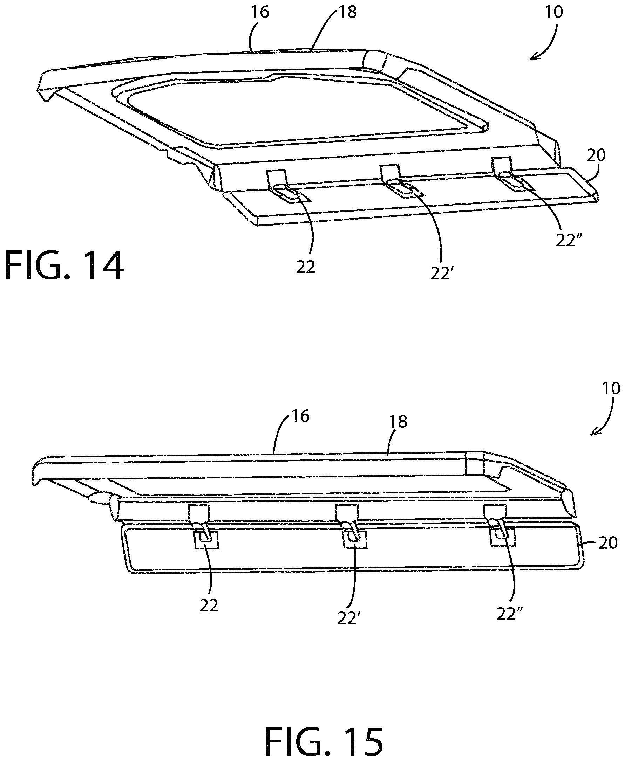

FIGS. 14 and 15 illustrate the vehicle package tray apparatus 10 in an initial, unstressed position and a stressed position, respectively. Additionally, the package tray apparatus 10 utilizes a plurality of hinge apparatus 22, 22', and 22". As noted above, it is to be understood that the disclosed inventive concept may utilize any number of hinge apparatus 22 based on the size and weight of the package tray 16. The hinge apparatus 22, 22', and 22" are preferably equidistantly spaced apart from one another along the entire intersection of the package tray portion 18 and the flipper panel portion 20. Thus, the hinge apparatus 22, 22', and 22" are equally stressed as the flipper panel portion 20 moves to the stressed position illustrated in FIG. 15. The hinge apparatus 22, 22', and 22" then simultaneously return the flipper panel portion 20 to its initial unstressed position illustrated in FIG. 14 when the combined force of the hinge apparatus 22, 22', 22" are greater than the opposing force of the rear seat 12 on the flipper panel portion 20.

From the above, it is to be appreciated that defined herein is a new and unique vehicle package tray apparatus and a hinge apparatus for use with an adjustable package tray. One skilled in the art will readily recognize from such discussion, and from the accompanying drawings and claims, that various changes, modifications, and other variations can be made therein without departing from the spirit and fair scope of the disclosed inventive concept as defined by the following claims.

### LIST OF REFERENCE NUMERALS

- 10: Vehicle package tray apparatus
- 12: Rear seat
- 14: Seatback
- 16: Package tray
- 18: Package tray portion
- 20: Flipper panel portion
- 22: Hinge apparatus
- 24: Mechanical fastener
- 26: Top surface of package tray portion
- 28: Bottom surface of package tray portion
- 30: Top surface of flipper panel portion
- 32: Bottom surface of flipper panel portion
- 34: Package tray hinge
- 36: Spring
- 38: Spring cover
- 40: Flipper panel hinge
- 42: Spring housing
- 44: End wall of spring housing
- 46: Open second end of spring housing
- 48: Sidewall of spring housing
- 50: Tubular member
- 52: Bore in tubular member
- 54: Cavity in spring housing
- 56: Spokes
- 58: Slot in first end of spring housing
- 59: Flange
- 60: Package tray attachment plate
- 62: Top surface of package tray attachment plate
- 64: Bottom surface of package tray attachment plate
- 66: Steps in package tray attachment plate
- 68: Grooves in package tray portion
- 70: First end of spring cover
- 72: Second end of spring cover
- 74: Stem
- 76: Lip of stem
- 78: Slot formed in spring cover
- 80: Locking pin
- 82: Finger
- 84: Bore in finger
- 86: Extension of locking pin
- 88: First end of extension
- 90: Second end of extension
- 92: Grip member of locking pin
- 94: Ridges on grip member
- 96: Finger receptor
- 98: Flipper panel attachment plate
- 99: Top surface of flipper panel attachment plate
- 100: Support member
- 101: Bottom surface of flipper panel attachment plate
- 102: First channel in finger receptor
- 103: Steps in flipper panel attachment plate
- 104: First end of first channel
- 105: Grooves in flipper panel portion
- 106: Second end of first channel
- 108: First end of support member
- 110: Second end of support member
- 112: Second channel in support member
- 114: First end of second channel
- 116: Second end of second channel
- 118: Coil of spring
- 120: First tip of spring
- 122: Arm of spring
- 124: Second tip of spring
- 126: Bend in spring

## Claims

1. A vehicle package tray hinge apparatus comprising:
a package tray hinge;
a spring housed within said package tray hinge;
a spring cover rotatably attached to said package tray hinge; and
a flipper panel hinge,
wherein said spring cover and said spring are insertable into said flipper panel hinge and translate between a first position and a second position as said spring cover rotates with respect to said package tray hinge.

2. The vehicle package tray hinge apparatus of Claim 1, wherein said package tray hinge further comprises:
a spring housing having an end wall, said spring being housed within said spring housing;
a tubular member extending axially from said end wall of said spring housing and axially through said spring; and
a package tray attachment plate extending from said spring housing.

3. The vehicle package tray hinge apparatus of Claim 2, wherein said flipper panel hinge further comprises:
a finger receptor having a first elongated channel having a first end and a second end;
a flipper panel attachment plate; and
a support member interconnecting said finger receptor and said flipper panel attachment plate, said support member having a second elongated channel having a first end and a second end.

4. The vehicle package tray hinge apparatus of Claim 3, wherein said spring further comprises:
a coil;
a first tip extending from said coil;
an arm extending from said coil opposite said first tip; and
a second tip extending perpendicular to said arm,
wherein said second tip is insertable into said second elongated channel and translatable between said first end and said second end of said second elongated channel.

5. The vehicle package tray hinge apparatus of Claim 3, wherein said spring cover further comprises:
a stem insertable into said tubular member; and
a finger insertable into said first elongated channel, said finger being translatable between said first end and said second end of said first elongated channel.

6. The vehicle package tray hinge apparatus of Claim 1, further comprising:
a first slot formed in said spring cover;
a second slot formed in said package tray hinge; and
a locking pin insertable through said first slot and said second slot for restricting rotation of said spring cover with respect to said package tray hinge.

7. A vehicle package tray hinge apparatus comprising:
a package tray hinge;
a spring housed within said package tray hinge; and
a flipper panel hinge,
wherein said spring is insertable into said flipper panel hinge and translates between a first position and a second position as said spring rotates with respect to said package tray hinge.

8. The vehicle package tray hinge apparatus of Claim 7, further comprising:
a spring cover rotatably attached to said package tray hinge, said spring cover including a finger extending perpendicular to said spring cover, said finger being insertable into said flipper panel hinge and translatable between a first end and a second end of said flipper panel hinge.

9. The vehicle package tray hinge apparatus of Claim 8, further comprising:
a slot formed in said spring cover; and
a locking pin insertable through said slot,
wherein said locking pin is inserted through said slot for restricting rotation of said spring cover with respect to said package tray hinge.

10. The vehicle package tray hinge apparatus of Claim 7, further comprising:
a package tray attachment plate attached to said package tray hinge, said package tray attachment plate having a top surface and a bottom surface, said top surface including a plurality of package tray steps; and
a flipper panel attachment plate attached to said flipper panel hinge, said flipper panel attachment plate having a top surface and a bottom surface, said top surface including a plurality of flipper panel steps.

11. A vehicle package tray apparatus comprising:
a package tray;
a package tray hinge attached to said package tray;
a spring housed within said package tray hinge; and
a flipper panel hinge attached to said package tray,
wherein said spring is insertable into said flipper panel hinge and translates between a first position and a second position as said spring rotates with respect to said package tray hinge.

12. The vehicle package tray apparatus of Claim 11, wherein said package tray comprises:
a package tray portion;
a flipper panel portion; and
a fastener rotatably connecting said flipper panel portion to said package tray portion, said fastener defining a first axis of rotation.

13. The vehicle package tray apparatus of Claim 12, further comprising:
a spring cover rotatably attached to said package tray hinge and rotatable about a second axis of rotation, said second axis of rotation being offset from said first axis of rotation.

14. The vehicle package tray apparatus of Claim 12, further comprising:
a package tray attachment plate attached to said package tray hinge, said package tray attachment plate having a top surface and a bottom surface, said top surface including a plurality of package tray steps, said plurality of package tray steps nests within a plurality of package tray grooves formed in said package tray portion; and
a flipper panel attachment plate attached to said flipper panel hinge, said flipper panel attachment plate having a top surface and a bottom surface, said top surface including a plurality of flipper panel steps, said plurality of flipper panel steps nests within a plurality of flipper panel grooves formed in said flipper panel portion.

15. The vehicle package tray apparatus of Claim 11, wherein said spring comprises:
a coil;
a first tip extending from said coil, said first tip being secured within said package tray hinge;
an arm extending from said coil opposite said first tip; and
a second tip extending perpendicular to said arm,
wherein said second tip is insertable into said flipper panel hinge and translatable between a first end and a second end of said flipper panel hinge.
